# EUROPÄISCHE PATENTSCHRIFT

(11) **EP 2 936 212 B1**
(45) Veröffentlichungstag und Bekanntmachung des Hinweises auf die Patenterteilung: **14.12.2016**
(21) Anmeldenummer: 13783336.4
(22) Anmeldetag: 25.10.2013
(51) Int. Cl.: G01V 3/10, G01V 3/15

(54) **SENSOR ZUR ORTUNG METALLISCHER ODER MAGNETISCHER OBJEKTE**
SENSOR FOR LOCATING METAL OR MAGNETIC OBJECTS
CAPTEUR POUR LOCALISER DES OBJETS METALLIQUES OU MAGNETIQUES

(30) Priorität: 20.12.2012 DE 102012223875
(43) Veröffentlichungstag der Anmeldung: 28.10.2015
(73) Patentinhaber: Robert Bosch GmbH, 70442 Stuttgart (DE)
(72) Erfinder: WINTERHALTER, Juergen, 70191 Stuttgart (DE); ZIBOLD, Tobias, 70567 Stuttgart (DE); ALBRECHT, Andrej, 70567 Stuttgart (DE)
(86) Internationale Anmeldenummer: PCT/EP2013/072369
(87) Internationale Veröffentlichungsnummer: WO 2014/095135

(56) Entgegenhaltungen:
- EP-A1- 0 130 940
- WO-A1-02/091021
- WO-A1-2010/133328

## Beschreibung

Die Erfindung betrifft einen Sensor zur Ortung metallischer oder magnetischer Objekte gemäß Patentanspruch 1.

### Stand der Technik

Im Stand der Technik ist aus WO 2010/133328 A1 ein Sensor zur Ortung metallischer oder magnetischer Objekte bekannt, wobei zwei Sendespulen und eine Empfangsspule vorgesehen sind. Die Sendespulen und die Empfangsspule sind induktiv miteinander gekoppelt und zur Wechselwirkungsentkopplung teilweise überlappend angeordnet. Zudem ist eine Regelschaltung vorgesehen, die dazu eingerichtet ist, die Empfangsspannung in der Empfangsspule zum Verschwinden zu bringen. Eine erste Sendespule ist mit einer ersten Empfangsspule in einer ersten Ebene angeordnet. Eine zweite Sendespule ist mit einer zweiten Empfangsspule in einer zweiten Ebene angeordnet. Die Sende- und Empfangsspulen der ersten Ebene sind gegenüber der Sende- und Empfangsspulen der zweiten Ebene um einen Winkel verdreht. Zudem sind die gemeinsamen Mittelachsen der jeweils in einer Ebene angeordneten Paare von Sende- und Empfangsspulen zueinander verschoben.

### Offenbarung der Erfindung

Die Aufgabe der Erfindung besteht darin, einen verbesserten Sensor zur Ortung metallischer und magnetischer Objekte bereitzustellen.

Die Aufgabe der Erfindung wird durch den Sensor gemäß Patentanspruch 1 gelöst.

Weitere vorteilhafte Ausführungsformen der Erfindung sind in den abhängigen Ansprüchen angegeben.

Ein Vorteil des Sensors gegenüber dem bekannten Stand der Technik besteht darin, dass keine Verschiebung der Mittelachsen der Spulenanordnungen der verschiedenen Ebenen notwendig ist, die zu einer Verschlechterung des Signal-Rausch-Verhältnisses führt.

Ein weiterer Vorteil besteht im Ausgleich von Fertigungstoleranzen durch eine Variation der Induktivität der Empfangsteilspulen. Dadurch werden Fertigungstoleranzen und zeitliche und abhängig von Umgebungsbedingungen sich ändernde elektrische Eigenschaften von Schaltern, Lötbrücken usw. ausgeglichen. Im Stand der Technik erfordert ein analoger Ausgleich von Fertigungstoleranzen eine zusätzliche Verschiebung der Mittelachsen, was nicht möglich ist, wenn die Spulen als Printspulen auf einer Vorder- und Rückseite einer einzelnen Leiterplatte angeordnet sind.

Ein weiterer Vorteil der Erfindung besteht darin, dass der ohmsche Widerstand und die Induktivität der beiden Sendespulen im Rahmen der Fertigungstoleranzen identisch sind und daher gleiche Amplituden und Phasen der die Sendespulen anregenden Wechselspannungen zu gleichen Sendeströmen führen. Dies erleichtert einen gleichzeitigen induktiven und kapazitiven Abgleich der Sendespulen.

In einer Ausführungsform unterscheiden sich die von den Wicklungen der Empfangsteilspulen eingeschlossenen Flächen. Dadurch können auf einfache Weise unterschiedliche Induktivitäten erzeugt werden, die zudem präzise festgelegt sind.

In einer Ausführungsform unterscheiden sich die Empfangsteilspulen in der Anzahl der Wicklungen.

In einer weiteren Ausführungsform ist ein mittlerer Durchmesser der Wicklungen der ersten Empfangsteilspule unterschiedlich zum mittleren Durchmesser der Wicklungen der zweiten Empfangsteilspule.

In einer weiteren Ausführungsform weisen die Wicklungen der ersten Empfangsteilspule, insbesondere teilkreisförmige und/oder gerade Abschnitte der Wicklungen, andere Abstände zueinander auf im Vergleich zu Wicklungen der zweiten Empfangsteilspule.

Die Erfindung wird im Folgenden anhand der Figuren näher erläutert. Es zeigen:
Fig. 1 eine erste Sendespule mit einer Empfangsteilspule,
Fig. 2 eine zweite Sendespule mit einer zweiten Empfangsteilspule,
Fig. 3 die Anordnung der Sende- und Empfangsteilspulen übereinander in zwei Ebenen,
Fig. 4 eine weitere erste Sendespule und eine weitere erste Empfangsteilspule,
Fig. 5 eine weitere zweite Sendespule und eine weitere zweite Empfangsteilspule,
Fig. 6 die Anordnung der weiteren Sende- und Empfangsteilspulen der Figuren 4 und 5 übereinander, und
Fig. 7 eine schematische Darstellung einer Schaltungsanordnung zur Bestromung der Sendespulen und zum Auswerten des Empfangssignals der Empfangsspule.

Ein Grundprinzip des Sensors besteht darin, mithilfe von Sendespulen elektromagnetische Felder zu erzeugen und eine Störung der elektromagnetischen Felder durch magnetische oder metallische Objekte mithilfe einer Empfangsspule zu detektieren. In der Empfangsspule wird durch die von den Sendespulen erzeugten elektromagnetischen Felder aufgrund der Maxwell'schen Gleichungen eine Empfangsspannung erzeugt. Wird der Sensor in die Nähe eines magnetischen oder metallischen Objektes bewegt, so verändern sich die elektromagnetischen Felder. Dies bewirkt wiederum eine Änderung der Empfangsspannung. Die Änderung der Empfangsspannung wird mithilfe einer Sensorelektronik erfasst und ausgewertet. Die Abstimmung der Empfangsspule und der Sendespulen ist relativ aufwendig und kann z.B. durch Fertigungsungenauigkeiten der Elemente der Empfangsspule sehr beeinträchtigt werden.

Für eine Verbesserung der Robustheit des Sensors gegenüber Fertigungsungenauigkeiten ist es von Vorteil, die Empfangsspule in zwei Empfangsteilspulen auszubilden und die Induktivität, d.h. die Empfindlichkeit der Empfangsteilspulen zur Erzeugung einer elektrischen Spannung bei gleichem elektromagnetischen Feld unterschiedlich auszubilden. Dazu können die Empfangsteilspulen z.B. eine unterschiedliche Anzahl von Wicklungen aufweisen. Zudem können die Wicklungen der Empfangsteilspulen unterschiedlich große Flächen begrenzen. Für die Induktivität zählt jede Fläche, die von einer Wicklung begrenzt wird. Die Unterschiede in der Induktivität betragen beispielsweise 0,1% oder mehr der Induktivität der Empfangsteilspule mit der größeren Induktivität.

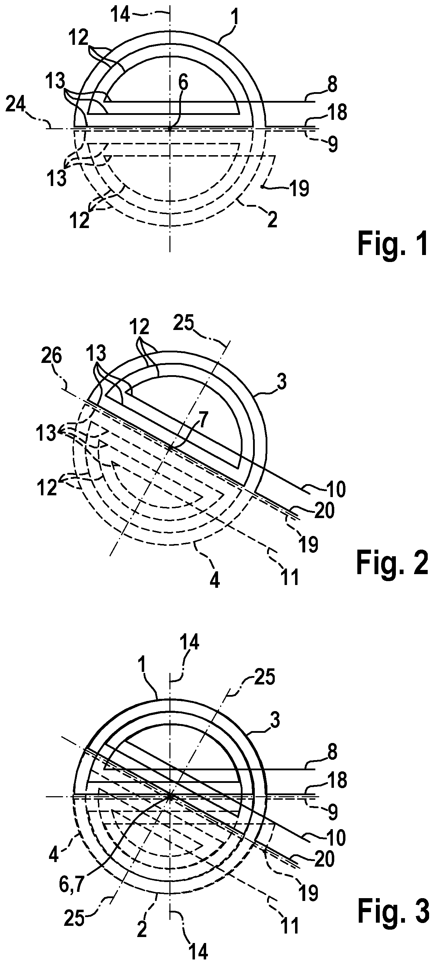

Figur 1 zeigt in einer schematischen Darstellung eine erste Sendespule 1, deren Wicklungen in einer D-Form ausgebildet sind und in einer ersten Ebene des Sensors angeordnet ist. Die erste Sendespule 1 weist Wicklungen mit kreisbogenförmigen Abschnitten 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 bildet fast einen vollen Halbkreis. Der äußerste kreisbogenförmige Abschnitt 12 weist einen radialen ersten Mittelpunkt 6 auf. Durch den ersten Mittelpunkt 6 ist eine erste Gerade 14 eingezeichnet, die in der ersten Ebene verläuft. Senkrecht zur ersten Geraden 14 ist eine zweite Gerade 24 eingezeichnet, die ebenfalls in der ersten Ebene verläuft. Die geraden Abschnitte 13 der ersten Sendespule 1 sind senkrecht zur ersten Geraden 14 angeordnet. Die geraden Abschnitte 13 und die kreisbogenförmigen Abschnitte 12 der ersten Sendespule 1 sind spiegelsymmetrisch zur ersten Geraden 14 angeordnet. Radiale Mittelpunkte der kreisbogenförmigen Abschnitte sind entlang der ersten Geraden 14 angeordnet. Die Radien der einzelnen kreisbogenförmigen Abschnitte 12 unterscheiden sich beispielsweise um jeweils den gleichen Wert. Die Längen der einzelnen kreisbogenförmigen Abschnitte 12 nehmen von außen nach innen beispielsweise um jeweils den gleichen Wert ab.

In der Ebene der ersten Sendespule 1 ist eine erste Empfangsteilspule 2 angeordnet, deren Wicklungen ebenfalls in einer D-Form ausgebildet sind. Die erste Empfangsteilspule 2 weist Wicklungen mit kreisbogenförmigen Abschnitten 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 bildet fast einen vollen Halbkreis. Der äußerste kreisbogenförmige Abschnitt 12 weist als Kreismittelpunkt den ersten Mittelpunkt 6 auf. Die geraden Abschnitte 13 sind senkrecht zur ersten Geraden 14 angeordnet. Die geraden Abschnitte 13 und die kreisbogenförmigen Abschnitte 12 der ersten Empfangsteilspule 2 sind spiegelsymmetrisch zur ersten Geraden 14 angeordnet. Radiale Mittelpunkte der kreisbogenförmigen Abschnitte 12 sind entlang der ersten Geraden 14 angeordnet. Die Radien der einzelnen kreisbogenförmigen Abschnitte 12 unterscheiden sich beispielsweise um jeweils den gleichen Wert. Die Längen der einzelnen kreisbogenförmigen Abschnitte 12 nehmen von außen nach innen beispielsweise um jeweils den gleichen Wert ab.

Die erste Sendespule 1 und die erste Empfangsspule 2 sind im wesentlichen spiegelsymmetrisch gegenüberliegend zur zweiten Geraden 24 angeordnet. In dem dargestellten Ausführungsbeispiel ist die erste Empfangsteilspule 2 nahezu identisch zur ersten Sendespule 1 ausgebildet. Die erste Sendespule 1 weist die gleiche Anzahl von Wicklungen und die kreisbogenförmigen Abschnitte 12 weisen die gleichen Radien wie die Wicklungen der ersten Empfangsteilspule 2 auf.

Die erste Sendespule 1 weist erste Anschlüsse 8, 18 auf. Die erste Empfangsteilspule 2 weist einen zweiten Anschluss 9 und eine Durchkontaktierung 19 zu einer zweiten Ebene auf. Über die ersten Anschlüsse 8, 18 wird die erste Sendespule mit einem Sendestrom versorgt. Über den zweiten Anschluss 9 wird ein Empfangssignal an der ersten Empfangsteilspule 2 abgegriffen.

Figur 2 zeigt eine zweite Sendespule 3, die in einer zweiten Ebene des Sensors angeordnet ist, deren Wicklungen ebenfalls in einer D-Form ausgebildet sind. Die zweite Sendespule 3 weist Wicklungen mit kreisbogenförmigen Abschnitten 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 bildet fast einen vollen Halbkreis. Der äußerste kreisbogenförmige Abschnitt 12 weist einen radialen zweiten Mittelpunkt 7 auf. Durch den zweiten Mittelpunkt 7 ist eine erste weitere Gerade 25 eingezeichnet, die in der zweiten Ebene angeordnet ist. Senkrecht zur ersten weiteren Geraden 24 ist eine zweite weitere Gerade 26 eingezeichnet, die in der zweiten Ebene angeordnet ist. Die geraden Abschnitte 13 sind senkrecht zur ersten weiteren Geraden 25 angeordnet. Die geraden Abschnitte 13 und die kreisbogenförmigen Abschnitte 12 der zweiten Sendespule 3 sind spiegelsymmetrisch zur ersten weiteren Geraden 25 angeordnet. Radiale Mittelpunkte der kreisbogenförmigen Abschnitte sind entlang der ersten weiteren Geraden 25 angeordnet. Die Radien der einzelnen kreisbogenförmigen Abschnitte 12 unterscheiden sich beispielsweise um jeweils den gleichen Wert. Die Längen der einzelnen kreisbogenförmigen Abschnitte 12 nehmen von außen nach innen beispielsweise um jeweils den gleichen Wert ab.

In der Ebene der zweiten Sendespule 3 ist eine zweite Empfangsteilspule 4 angeordnet, deren Wicklungen ebenfalls in einer D-Form ausgebildet sind. Die zweite Empfangsteilspule 4 weist Wicklungen mit kreisbogenförmigen Abschnitten 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 bildet fast einen vollen Halbkreis. Der äußerste kreisbogenförmige Abschnitt 12 der zweiten Empfangsteilspule 4 weist als Kreismittelpunkt den zweiten Mittelpunkt 7 auf. Die geraden Abschnitte 13 sind senkrecht zur ersten weiteren Geraden 25 angeordnet. Die geraden Abschnitte 13 und die kreisbogenförmigen Abschnitte 12 der zweiten Empfangsteilspule 4 sind spiegelsymmetrisch zur ersten weiteren Geraden 25 angeordnet. Radiale Mittelpunkte der kreisbogenförmigen Abschnitte sind entlang der ersten weiteren Geraden 25 angeordnet. Die Radien der einzelnen kreisbogenförmigen Abschnitte 14 unterscheiden sich beispielsweise um jeweils den gleichen Wert. Die zweite Sendespule 3 und die zweite Empfangsteilspule 4 sind in Bezug auf die zweite weitere Gerade 26 spiegelsymmetrisch auf gegenüber liegenden Seiten angeordnet. Die Längen der einzelnen kreisbogenförmigen Abschnitte 12 nehmen von außen nach innen beispielsweise um jeweils den gleichen Wert ab. Die zweite Sendespule 3 weist dritte Anschlüsse 10, 20 auf, über die ein Sendestrom der zweiten Sendespule 3 zugeführt wird. Zudem steht die zweite Empfangsspule 4 über die Durchkontaktierung 19 mit der ersten Empfangsteilspule 2 in Verbindung. Die zweite Empfangsteilspule 4 weist einen vierten Anschluss 11 auf, über den ein von der ersten und der zweiten Empfangsteilspule 4 erfasstes Empfangssignal abgegriffen werden kann.

Die zweite Sendespule 3 ist identisch zur ersten Sendespule 1 ausgebildet. Die zweite Empfangsteilspule 4 ist unterschiedlich zur ersten Empfangsteilspule 2 ausgebildet. In dem dargestellten Ausführungsbeispiel weist die zweite Empfangsteilspule 4 eine zusätzliche innere Wicklung mit einem zusätzlichen inneren kreisbogenförmigen Abschnitt 12 und einem geraden Abschnitt 13 auf. Der äußerste kreisbogenförmige Abschnitt der zweiten Empfangsteilspule 4 weist den gleichen Radius wie der äußerste kreisbogenförmige Abschnitt 12 der zweiten Sendespule 3 auf. Abhängig von der gewählten Ausführung kann die zweite Empfangsteilspule 4 auch eine zusätzliche äußere Wicklung aufweisen.

Figur 3 zeigt in einer schematischen Darstellung die Anordnung der zwei Sendespulen 1,3 und der zwei Empfangsteilspulen 3,4 der Figuren 1 und 2 gemäß einer Anordnung in einem Sensor, in dem die zwei Ebenen übereinander angeordnet sind. Dabei sind z.B. die erste Sendespule 1 und die erste Empfangsteilspule 2 auf einer ersten Seite und die zweite Sendespule 3 und die zweite Empfangsteilspule 4 auf einer zweiten Seite einer Leiterplatte angeordnet. Die erste und die zweite Empfangsteilspule 2, 4 sind zu einer Empfangsspule verbunden. Die Sende- und Empfangsteilspulen sind in der Weise angeordnet, dass der erste und der zweite Mittelpunkt 6, 7 zusammen fallen. Die Sende- und Empfangsteilspule der zwei Ebenen sind gegeneinander verdreht, so dass die erste Gerade 14 und die erste weitere Gerade 25 einen Winkel zueinander aufweisen. In dem dargestellten Beispiel beträgt der Winkel ungefähr 45 °. Typische Winkel für Spulen mit 40 Windungen, 4 cm Durchmesser und Abstand der Ebenen von 1,5 mm liegen im Bereich zwischen 65° und 70°.

Die zweite Empfangsteilspule 4 weist in dem dargestellten Beispiel eine größere Anzahl von Wicklungszahlen als die erste Empfangsteilspule 2 auf, wobei die Wicklungszahl der zweiten Empfangsteilspule 4 um einen ganzzahligen Wert oder um einen gebrochenzahligen Wert größer ist.

Abhängig von der Ausführungsform kann auch die Anzahl der Wicklungszahlen der ersten Empfangsteilspule 2 größer als die Anzahl der Wicklungszahlen der zweiten Empfangsteilspule 4 sein. Die erste und die zweite Sendespule 1, 3 sind vorzugsweise identisch ausgebildet, d.h. sie haben die gleiche Wicklungszahl und die gleichen Radien für die kreisbogenförmigen ersten Abschnitte 12.

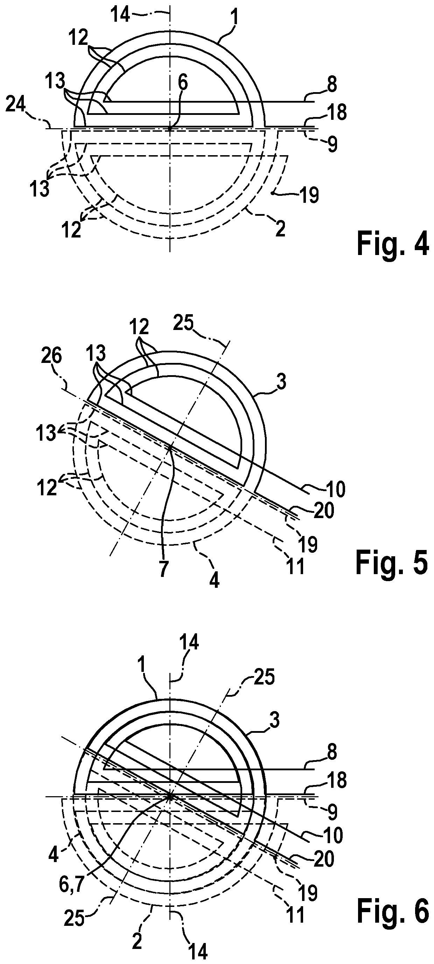

Figur 4 zeigt eine erste Ebene einer weitere Ausführungsform eines Sensors, wobei die erste Sendespule 1 Wicklungen aufweist, die in einer D-Form angeordnet sind. Die erste Sendespule 1 weist Wicklungen mit kreisbogenförmige Abschnitte 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 weist als Kreismittelpunkt einen ersten Mittelpunkt 6 auf. Durch den ersten Mittelpunkt 6 ist eine erste Gerade 14 in der ersten Ebene eingezeichnet. Senkrecht zur ersten Geraden 14 ist eine zweite Gerade 24 in der ersten Ebene eingezeichnet. Die geraden Abschnitte 13 sind senkrecht zur ersten Geraden 14 angeordnet. Die geraden Abschnitte 13 und die kreisbogenförmigen Abschnitte 12 der ersten Sendespule 1 sind spiegelsymmetrisch zur ersten Geraden 14 angeordnet. Radiale Mittelpunkte der kreisbogenförmigen Abschnitte 12 sind entlang der ersten Geraden 14 angeordnet. Die Radien der einzelnen kreisbogenförmigen Abschnitte unterscheiden sich beispielsweise um jeweils den gleichen Wert.

In der ersten Ebene der ersten Sendespule 1 ist eine erste Empfangsteilspule 2 angeordnet, deren Wicklungen ebenfalls in einer D-Form ausgebildet sind. Die erste Empfangsteilspule 2 weist Wicklungen mit kreisbogenförmigen Abschnitten 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 weist als Kreismittelpunkt den radialen ersten Mittelpunkt 6 auf. Die geraden Abschnitte 13 sind senkrecht zur ersten Geraden 14 angeordnet. Die geraden Abschnitte 13 und die kreisbogenförmigen Abschnitte 14 der ersten Empfangsteilspule 2 sind spiegelsymmetrisch zur ersten Geraden 14 angeordnet. Radiale Mittelpunkte der kreisbogenförmigen Abschnitte sind entlang der ersten Geraden 14 angeordnet. Die Radien der einzelnen kreisbogenförmigen Abschnitte 12 unterscheiden sich beispielsweise um jeweils den gleichen Wert. Die erste Sendespule 1 und die erste Empfangsteilspule 2 sind spiegelsymmetrisch gegenüberliegend zur zweiten Geraden 24 angeordnet.

Die erste Empfangsteilspule 2 weist die gleiche Anzahl von Wicklungen wie die erste Sendespule 1 auf, jedoch weist der äußerste kreisbogenförmige erste Abschnitt 12 der ersten Empfangsteilspule 2 einen größeren Radius als der äußerste kreisbogenförmige erste Abschnitt 12 der ersten Sendespule 1 auf. Somit ist der mittlere Durchmesser der Wicklungen der ersten Empfangsteilspule größer als der mittlere Durchmesser der Wicklungen der ersten Sendespule 1.

Figur 5 zeigt eine zweite Ebene der weiteren Ausführungsform des Sensors mit einer zweiten Sendespule 3 und einer zweiten Empfangsteilspule 4. Die zweite Sendespule 3 weist Wicklungen mit kreisbogenförmigen Abschnitten 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 weist als Kreismittelpunkt einen zweiten Mittelpunkt 7 auf. Durch den zweiten Mittelpunkt 7 ist eine erste weitere Gerade 25 in der zweiten Ebene eingezeichnet. Senkrecht zur ersten weiteren Geraden 24 ist eine zweite weitere Gerade 26 in der zweiten Ebene eingezeichnet. Die geraden Abschnitte 13 sind senkrecht zur ersten weiteren Geraden 25 angeordnet. Die geraden Abschnitte 13 und die kreisbogenförmigen Abschnitte 12 der zweiten Sendespule 3 sind spiegelsymmetrisch zur ersten weiteren Geraden 25 angeordnet. Radiale Mittelpunkte der kreisbogenförmigen Abschnitte sind entlang der ersten weiteren Geraden 25 angeordnet. Die Radien der einzelnen kreisbogenförmigen Abschnitte 12 unterscheiden sich beispielsweise um jeweils den gleichen Wert.

In der zweiten Ebene der zweiten Sendespule 3 ist eine zweite Empfangsteilspule 4 angeordnet, deren Wicklungen ebenfalls in einer D-Form ausgebildet sind. Die zweite Empfangsteilspule 4 weist Wicklungen mit kreisbogenförmigen Abschnitten 12 auf, die mit geraden Abschnitten 13 in Verbindung stehen. Die kreisbogenförmigen ersten Abschnitte 12 sind symmetrisch zueinander angeordnet. Der äußerste kreisbogenförmige Abschnitt 12 weist als Kreismittelpunkt den zweiten Mittelpunkt 7 auf. Die geraden Abschnitte 13 sind senkrecht zur ersten weiteren Geraden 25 angeordnet. Die geraden Abschnitte 13 und die kreisbogenförmigen Abschnitte 12 sind spiegelsymmetrisch zur ersten weiteren Geraden 25 angeordnet. Radiale Mittelpunkte der kreisbogenförmigen Abschnitte sind entlang der ersten weiteren Geraden 25 angeordnet. Die Radien der einzelnen kreisbogenförmigen Abschnitte 14 unterscheiden sich beispielsweise um jeweils den gleichen Wert.

Die zweite Sendespule 3 weist dritte Anschlüsse 10, 20 auf, über die ein Sendestrom der zweiten Sendespule 3 zugeführt wird. Die zweite Empfangsteilspule 4 weist einen vierten Anschluss 11 auf, über den ein von der zweiten Empfangsteilspule 4 erfasstes Empfangssignal abgegriffen werden kann. Zudem steht die zweite Empfangsteilspule 4 über die Durchkontaktierung 19 mit der ersten Empfangsteilspule 2 in Verbindung und bilden eine Empfangsspule.

Die zweite Sendespule 3 ist identisch zur ersten Sendespule 1 ausgebildet. Die zweite Empfangsteilspule 4 der Figur 5 ist unterschiedlich zur ersten Empfangsteilspule 2 der Figur 4 ausgebildet. In dem dargestellten Ausführungsbeispiel weist die zweite Empfangsteilspule 4 einen weiteren äußeren kreisbogenförmigen Abschnitt 12 auf, der einen größeren Radius als der äußerste kreisbogenförmige Abschnitt 12 der ersten Empfangsteilspule 2 aufweist. Der äußerste kreisbogenförmige Abschnitt der zweiten Empfangsteilspule 4 weist den gleichen Radius wie der äußerste kreisbogenförmige Abschnitt 12 der zweiten Sendespule 3 auf. Die zweite Sendespule 3 weist die gleiche Anzahl an Wicklungen auf. Somit ist der mittlere Radius der Wicklungen der ersten Empfangsteilspule 2 größer als der mittlere Radius der Wicklungen der zweiten Empfangsteilspule 4. Abhängig von der gewählten Ausführung kann auch die erste Empfangsteilspule 2 eine Wicklung mit einem größeren Radius aufweisen.

Die zweite Sendespule 3 und die zweite Empfangsteilspule 4 sind in Bezug auf die zweite weitere Gerade 26 auf gegenüber liegenden Seiten angeordnet.

Die zweite Sendespule 3 weist einen kreisbogenförmigen äußersten ersten Abschnitte 12 auf, der einen größeren Radius als der kreisbogenförmige äußerste erste Abschnitt 12 der ersten Empfangsteilspule 2 der Figur 4. Die kreisbogenförmigen ersten Abschnitte 12 der zweiten Sendespule 3 und der zweiten Empfangsteilspule 4 sind symmetrisch zu dem zweiten Mittelpunkt 7 angeordnet.

Figur 6 zeigt die Anordnung der ersten und der zweiten Ebene des Sensors mit der ersten Sendespule 1 und der ersten Empfangsteilspule 2 und mit der zweiten Sendespule 3 und mit der zweiten Empfangsteilspule 4 der Figuren 4 und 5. Dabei sind die erste Sendespule 1 und die erste Empfangsteilspule 2, z.B. auf einer ersten Seite und die zweite Sendespule 3 und die zweite Empfangsteilspule 4 auf einer zweiten Seite einer Leiterplatte angeordnet. Die erste und die zweite Empfangsteilspule 2, 4 sind zu einer Gesamtspule verbunden. Die Sende- und Empfangsteilspulen sind in der Weise angeordnet, dass der erste und der zweite Mittelpunkt 6, 7 zusammen fallen. Jedoch ist die Anordnung, wie aus den Figuren 4 und 5 deutlich erkennbar, gegeneinander verdreht, d.h. die erste Gerade 14 und die erste weitere Gerade 25 sind um einen festgelegten Winkel, insbesondere um 65° - 70° gegeneinander verdreht.

Abhängig von der gewählten Ausführungsform können sich die erste und die zweite Empfangsteilspule eines Sensors sowohl in der Wicklungszahl als auch im mittleren Radius der kreisbogenförmigen Abschnitte 12 unterscheiden.

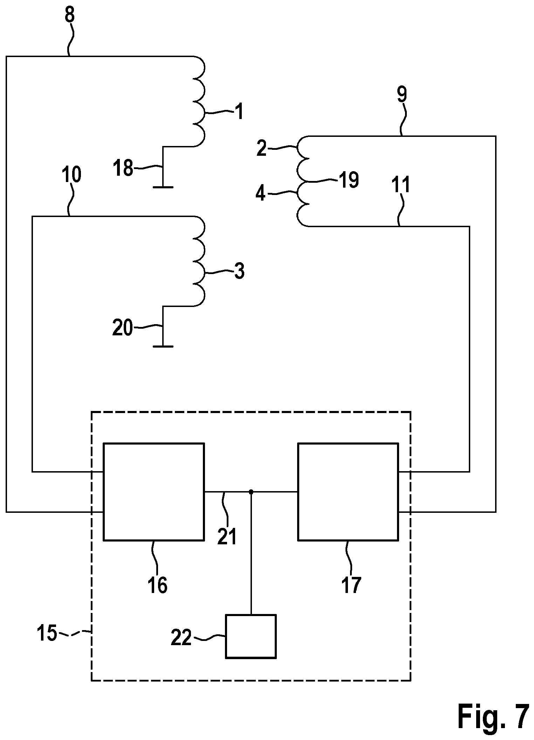

Figur 7 zeigt in einer schematischen Darstellung eine Schaltung 1, 5 zum Bestromen der Sendespulen 1, 3 und zur Auswertung des Empfangssignals der Empfangsteilspule 2, 4. Die Schaltung 15 weist einen Bestromungseinheit 16 zur Bestromung der Sendespulen 1, 3 und eine Auswerteeinheit 17 zum Auswerten des Spannungssignals der Empfangsteilspulen 2, 4 auf. Die Bestromungseinheit 16 und die Auswerteeinheit 17 können über eine Steuerleitung 21 verbunden sein. Damit kann beispielsweise die Größe der über die Empfangsteilspulen 2, 4 erfassten Spannungen an die Bestromungseinheit 16 weitergeleitet. Weiter kann damit beispielsweise die Phase eines der Sendeströme oder beider Sendeströme an die Auswerteeinheit 17 weitergeleitet werden. Die Bestromungseinheit 16 ist beispielsweise in der Weise ausgebildet, dass die Amplituden und/oder Phasen der Ströme der Sendespulen vorgegeben sind und unabhängig von dem Empfangssignal der Empfangsteilspulen 2, 4 sind. Die Auswerteeinheit 17 ist beispielsweise in der Weise ausgebildet, das an den Empfangsteilspulen 2, 4 empfangene Signal sowohl nach Amplitude als auch nach Phase auszuwerten. Abhängig vom Empfangssignal kann ein metallisches oder magnetisches Objekt im Bereich des Sensors von einer Überwachungseinheit erkannt werden.

Die beschriebene Anordnung eignet sich insbesondere für eine Ausbildung der Sende- und Empfangsteilspulen in den zwei Ebenen, wobei die zwei Ebenen auf einer Vorder- und einer Rückseite einer einzelnen Leiterplatte angeordnet sind. Die Spulen können dabei in Form von Printspulen ausgebildet sein, wobei die elektrischen Leitungen der Spulen auf die Leiterplatte aufgedruckt sind.

Abhängig von der gewählten Ausführungsform können die Sendespulen und die Empfangsteilspulen auch andere Formen als die D-Form aufweisen, insbesondere als Kreisspulen ausgebildet sein.

## Patentansprüche

1. Sensor zur Ortung metallischer oder magnetischer Objekte mit zwei Sendespulen (1, 3) und mit einer Empfangsspule, wobei die Empfangsspule aus zwei Empfangsteilspulen (2, 4) gebildet ist, wobei die erste Sendespule (1) und die erste Empfangsteilspule (2) in einer Ebene angeordnet sind, wobei eine erste Gerade (14) in einem Mittelpunkt (6) eine zweite Gerade (24) senkrecht schneidet, wobei die erste Sendespule (1) spiegelsymmetrisch zur ersten Geraden (14) angeordnet ist, wobei die erste Empfangsteilspule (2) spiegelsymmetrisch zur ersten Geraden (14) angeordnet ist, wobei die erste Sendespule (1) und die erste Empfangsteilspule (2) symmetrisch in Bezug auf die zweite Gerade (24) gegenüber liegend angeordnet sind, wobei die zweite Sendespule (3) und eine zweite Empfangsteilspule (4) in einer zweiten Ebene angeordnet sind, wobei sich in einem zweiten Mittelpunkt (7) der zweiten Ebene eine erste weitere Gerade (25) und eine zweite weitere Gerade (26) senkrecht schneiden, wobei die zweite Sendespule (3) spiegelsymmetrisch zur ersten weiteren Gerade (25) angeordnet ist, wobei die zweite Empfangsteilspule (4) spiegelsymmetrisch zur ersten weiteren Geraden (25) angeordnet ist, wobei die zweite Sendespule (3) und die zweite Empfangsteilspule (4) symmetrisch in Bezug auf die zweite weitere Gerade (26) gegenüber liegend angeordnet sind, wobei die erste Gerade (14) und die erste weitere Gerade (25) um einen Winkel verdreht zueinander angeordnet sind,
**dadurch gekennzeichnet, dass**
der erste Mittelpunkt (6) und der zweite Mittelpunkt (7) auf einer Mittenachse angeordnet sind, wobei die Mittenachse senkrecht auf den zwei Ebenen steht, und wobei die erste Empfangsteilspule (2) und die zweite Empfangsteilspule (4) unterschiedlich ausgebildet sind und unterschiedliche Induktivitäten aufweisen.

2. Sensor nach Anspruch 1, wobei die erste Gerade (14) und die erste weitere Gerade (25) um einen Winkel von 65° - 70° verdreht zueinander angeordnet sind.

3. Sensor nach einem der vorhergehenden Ansprüche, wobei die Wicklungen der Empfangsteilspulen (2,4) unterschiedliche Flächen begrenzen.

4. Sensor nach Anspruch 3, wobei die Empfangsteilspulen (2, 4) unterschiedliche Anzahlen von Wicklungen aufweisen.

5. Sensor nach einem der Ansprüche 3 oder 4, wobei sich ein mittlerer Durchmesser von Wicklungen der ersten Empfangsteilspule (2) vom mittleren Durchmesser von Wicklungen der zweiten Empfangsteilspule (4) unterscheidet.

6. Sensor nach einem der Ansprüche 3 bis 5, wobei Wicklungen der ersten Empfangsteilspule (2), insbesondere teilkreisförmige und/oder gerade Abschnitte der Wicklungen, andere Abstände zueinander aufweisen im Vergleich zu Wicklungen der zweiten Empfangsteilspule (4).

7. Sensor nach einem der vorhergehenden Ansprüche, wobei eine Sensorelektronik (15) vorgesehen ist, wobei die Sensorelektronik (15) ausgebildet ist, um die Sendespulen (1, 3) mit Strom zu versorgen und ein Empfangssignal der Empfangsspule (2, 4) auszuwerten, wobei die Sensorelektronik (15) ausgebildet ist, um die Sendespulen mit periodisch wechselnden, insbesondere sinusförmigen, Sendeströmen zu versorgen.

8. Sensor nach Anspruch 7, wobei die Sensorelektronik ausgebildet ist, um die Sendespulen (1, 3) mit Sensorströmen mit einer festgelegten Phase und/oder einer festgelegten Amplitude unabhängig von einem Empfangssignal der Empfangsspule (2, 4) zu versorgen.

9. Sensor nach Anspruch 8, wobei die Sensorelektronik ausgebildet ist das Empfangssignal der Empfangsspule (2, 4) sowohl nach Amplitude als auch nach Phase auszuwerten.

## Claims

1. Sensor for locating metal or magnetic objects including two transmitting coils (1, 3) and including one receiving coil, wherein the receiving coil is formed from two receiving subcoils (2, 4), wherein the first transmitting coil (1) and the first receiving subcoil (2) are arranged in a plane, wherein a first line (14) perpendicularly intersects a second line (24) at a center point (6), wherein the first transmitting coil (1) is arranged mirror-symmetrically with respect to the first line (14), wherein the first receiving subcoil (2) is arranged mirror-symmetrically with respect to the first line (14), wherein the first transmitting coil (1) and the first receiving subcoil (2) are arranged opposite, symmetrically with respect to the second line (24), wherein the second transmitting coil (3) and a second receiving subcoil (4) are arranged in a second plane, wherein a first additional line (25) and a second additional line (26) intersect perpendicularly at a second center point (7) of the second plane, wherein the second transmitting coil (3) is arranged mirror-symmetrically with respect to the first additional line (25), wherein the second receiving subcoil (4) is arranged mirror-symmetrically with respect to the first additional line (25), wherein the second transmitting coil (3) and the second receiving subcoil (4) are arranged opposite, symmetrically with respect to the second additional line (26), wherein the first line (14) and the first additional line (25) are arranged rotated through an angle relative to one another, **characterized in that** the first center point (6) and the second center point (7) are arranged on a central axis, wherein the central axis is perpendicular to the two planes, and wherein the first receiving subcoil (2) and the second receiving subcoil (4) are formed differently and have different inductances.

2. Sensor according to Claim 1, wherein the first line (14) and the first additional line (25) are arranged rotated through an angle of 65° to 70° relative to one another.

3. Sensor according to one of the preceding claims, wherein the windings of the receiving subcoils (2, 4) delimit different areas.

4. Sensor according to Claim 3, wherein the receiving subcoils (2, 4) have different numbers of windings.

5. Sensor according to one of Claims 3 or 4, wherein an average diameter of windings of the first receiving subcoil (2) differs from the average diameter of windings of the second receiving subcoil (4).

6. Sensor according to one of Claims 3 to 5, wherein windings of the first receiving subcoil (2), in particular partially circular and/or straight sections of the windings, have different spacings from one another in comparison to windings of the second receiving subcoil (4).

7. Sensor according to one of the preceding claims, wherein sensor electronics (15) are provided, wherein the sensor electronics (15) are designed to supply the transmitting coils (1, 3) with current and to evaluate a receiving signal of the receiving coil (2, 4), wherein the sensor electronics (15) are designed to supply the transmitting coils with periodically alternating, in particular sinusoidal, transmitting currents.

8. Sensor according to Claim 7, wherein the sensor electronics are designed to supply the transmitting coils (1, 3) with sensor currents having a specified phase and/or a specified amplitude, independently of a receiving signal of the receiving coil (2, 4).

9. Sensor according to Claim 8, wherein the sensor electronics are designed to evaluate the receiving signal of the receiving coil (2, 4) according to both amplitude and phase.

## Revendications

1. Capteur destiné à localiser des objets métalliques ou magnétiques ayant deux bobines émettrices (1, 3) et une bobine réceptrice, dans lequel la bobine réceptrice est formée de deux bobines réceptrices partielles (2, 4), dans lequel la première bobine réceptrice (1) et la première bobine réceptrice partielle (2) sont disposées dans un plan, dans lequel une première droite (14) coupe perpendiculairement une deuxième droite (24) en un point central (6), dans lequel la première bobine émettrice (1) est disposée de manière symétrique dans un miroir par rapport à la première droite (14), dans lequel la première bobine réceptrice partielle (2) est disposée de manière symétrique dans un miroir par rapport à la première droite (14), dans lequel la première bobine émettrice (1) et la première bobine réceptrice partielle (2) sont disposées l'une en face de l'autre de manière symétrique par rapport à la deuxième droite (24), dans lequel la deuxième bobine émettrice (3) et une deuxième bobine réceptrice partielle (4) sont disposées dans un deuxième plan, dans lequel une première autre droite (25) et une deuxième autre droite (26) se coupent perpendiculairement en un deuxième point central (7) du deuxième plan, dans lequel la deuxième bobine émettrice (3) est disposée de manière symétrique dans un miroir par rapport à la première autre droite (25), dans lequel la deuxième bobine réceptrice partielle (4) est disposée de manière symétrique dans un miroir par rapport à la première autre droite (25), dans lequel la deuxième bobine émettrice (3) et la deuxième bobine réceptrice partielle (4) sont disposées en face de manière symétrique par rapport à la deuxième autre droite (26), dans lequel la première droite (14) et la deuxième autre droite (25) sont disposées de manière tournée d'un certain angle l'une par rapport à l'autre, **caractérisé en ce que** le premier point central (6) et le deuxième point central (7) sont disposés sur un axe central, dans lequel l'axe central est perpendiculaire aux deux plans, et dans lequel la première bobine réceptrice partielle (2) et la deuxième bobine réceptrice partielle (4) sont réalisées de manière différente et présentent des inductances différentes.

2. Capteur selon la revendication 1, dans lequel la première droite (14) et la première autre droite (25) sont disposées de manière tournée l'une par rapport à l'autre d'un angle de 65°-70°.

3. Capteur selon l'une quelconque des revendications précédentes, dans lequel les enroulements des bobines réceptrices partielles (2, 4) délimitent des surfaces différentes.

4. Capteur selon la revendication 3, dans lequel les bobines réceptrices partielles (2, 4) présentent des nombres d'enroulements différents.

5. Capteur selon l'une quelconque des revendications 3 ou 4, dans lequel un diamètre moyen des enroulements de la première bobine réceptrice partielle (2) est différent du diamètre moyen des enroulements de la deuxième bobine réceptrice partielle (4).

6. Capteur selon l'une quelconque des revendications 3 à 5, dans lequel les enroulements de la première bobine réceptrice partielle (2), en particulier de sections en arcs de cercle et/ou droites des enroulements, présentent des distances différentes les uns par rapport aux autres par comparaison aux enroulements de la deuxième bobine réceptrice partielle (4).

7. Capteur selon l'une quelconque des revendications précédentes, dans lequel il est prévu une électronique de capteur (15), dans lequel l'électronique de capteur (15) est conçue pour alimenter en courant les bobines émettrices (1, 3) et pour évaluer un signal de réception des bobines réceptrices (2, 4), dans lequel l'électronique de capteur (15) est conçue pour délivrer aux bobines émettrices des courants d'émission alternatifs périodiques, notamment sinusoïdaux.

8. Capteur selon la revendication 7, dans lequel l'électronique de capteur est conçue pour délivrer aux bobines émettrices (1, 3) des courants de capteurs ayant une phase fixe et/ou une amplitude fixe indépendamment du signal de réception de la bobine réceptrice (2, 4).

9. Capteur selon la revendication 8, dans lequel l'électronique de capteur est conçue pour évaluer le signal de réception de la bobine réceptrice (2, 4) tant en fonction de l'amplitude que de la phase.
